# EUROPEAN PATENT APPLICATION

(11) **EP 2 046 024 A2**
(43) Date of publication of application: **08.04.2009**
(21) Application number: 08165762.9
(22) Date of filing: 02.10.2008
(51) Int. Cl.: H04N 5/445, H04N 7/24

(54) **Method and system for providing an advertisement in digital broadcasting**

(30) Priority: 05.10.2007 KR 20070100279
(71) Applicant: Alticast Corporation, Seoul 137-858 (KR)
(72) Inventor: Lee, Ji-Young, Seoul 138-786 (KR)
(74) Representative: Michalski, Stefan

(57) **Abstract**

A method and a system for providing an advertisement in digital broadcasting are disclosed. The method provides the advertisement in a broadcasting system coupled to at least one broadcasting terminal through a network. In addition, the method includes generating a video source for a program guide by processing a video signal for plural broadcasting programs and at least one advertisement, encoding the generated video source by using predetermined algorithm, and transmitting the encoded video source to the broadcasting terminal or terminals. The broadcasting terminal outputs the program guide having one or more advertisement sub-videos included in the video source in accordance with preset condition. As a result, various advertisements may be provided through the program guide.

## Description

### CROSS-REFERENCE TO RELATED APPLICATIONS

This application claims priority from Korean Patent Application No. 2007-100279 filed on October 5, 2007, the contents of which are incorporated herein by reference in its entirety.

### TECHNICAL FIELD

The present disclosure relates to a method and a system for providing an advertisement in a digital broadcasting, more particularly a method and a system for providing various advertisements through a program guide.

### RELATED ART

The past broadcasting service is provided through an analog method. However, digital broadcasting services have been actively studied according as users require high definition broadcasting, an interactive broadcasting and various additional services.

Standardization of the digital broadcasting has been developed, including European digital video broadcasting-multimedia home platform (Hereinafter, referred to as "DVB-MHP") and American advanced television systems committee-digital TV application software environment (Hereinafter, referred to as "ATSCDASE").

With the development of the standardization of the digital broadcasting, a broadcasting signal having a video signal, an audio signal and a data signal can be compressed to a digital signal. As a result, multi-channel may be applied in TV broadcasting. In addition, various programs may be provided in one channel due to increase of transmission rating.

According as various applications have been developed, data broadcasting services are available, in which a broadcasting and data (additional information) related to the broadcasting are provided, such as weather service, news service, stock service, email service, electric program guide (EPG) service, TV shopping service, banking service, call service and Internet search service.

Through compression of the data, the data broadcasting may be provided with improved picture quality. However, the data broadcasting has a problem in that channel changing velocity becomes slower than that of the analog broadcasting due to a time for downloading broadcasting programs of a channel selected by a user or a time for loading applications for the data broadcasting, etc.

Users change channels using a channel up/down key when the users lose interest in present viewing broadcasting. Many channels exist and the channel changing velocity is slow in the digital broadcasting. To enable a rapid channel search, most of digital broadcasting systems provide an EPG.

Typically, the digital broadcasting systems receive a video signal concerning a program broadcasted presently through an EPG generating section, process the video signal (e.g., converts the video signal to have small size), and provide the EPG in accordance with the processed result so that the user verifies easily video name and channel name concerning the program broadcasted presently and program information, etc.

The EPG is provided with mosaic type, and one EPG is usually made up of about twelve or sixteen sub-videos. Here, since one EPG has a limited number of sub-videos, different EPGs should be generated in case that many broadcasting channels exist. Then, the generated EPGs are respectively transmitted to corresponding broadcasting terminal through different channels. In addition, in case of changing arrangement of the broadcasting program included in one EPG, extra EPG should be generated.

Accordingly, in the conventional technique, many channels are required because many transmission channels are required to provide the EPGs arranged with various types for the same broadcasting program. As a result, loss of bandwidth is occurred.

In the conventional technique, the advertisement service is provided through the EPG for channel search. In this case, a digital broadcasting system generates the EPG in which an advertisement sub-video is inserted, and then the broadcasting terminal receives the generated EPG from the digital broadcasting system and outputs the received EPG. Here, every broadcasting terminal outputs the same advertisement sub-video, and the EPG is shown in a small area. Hence, the above service is not good in view of efficiency of commerce.

Namely, since the EPG is undifferentiatedly generated and outputted, the EPG does not reflect user's preference. Accordingly, the advertisement is not efficiently exposed to the users.

The above information disclosed in this Related Art section is only for enhancement of understanding of the background of the invention and therefore it may contain information that does not form the prior art that is already known in this country to a person of ordinary skill in the art.

### SUMMARY OF DISCLOSURE

Accordingly, the present invention is provided to substantially obviate one or more problems due to limitations and disadvantages of the related art.

An example embodiment of the present invention provides a method and a system for providing an advertisement corresponding to user's preference in a digital broadcasting.

Another example embodiment of the present invention provides a method and a system for providing an advertisement in a digital broadcasting, which provide various advertisements without load of a digital broadcasting system.

Still another example embodiment of the present invention provides a method and a system for providing an advertisement in a digital broadcasting, which provide a program guide having an advertisement sub-video corresponding to user's preference.

In one aspect, the present invention provides a method of providing an advertisement in a broadcasting system coupled to at least one broadcasting terminal through a network, the method comprising: generating a video source for a program guide by processing a video signal for plural broadcasting programs and at least one advertisement; encoding the generated video source by using predetermined algorithm; and transmitting the encoded video source to the broadcasting terminal or terminals, wherein the broadcasting terminal outputs the program guide having one or more advertisement sub-video included in the video source in accordance with preset condition.

In another aspect, the present invention provides a method of providing an advertisement in a broadcasting terminal for executing a broadcasting program transmitted from a broadcasting system through a network, the method comprising: receiving a video source for a program guide from the broadcasting system through the network, wherein the video source has sub-videos (broadcasting sub-video and advertisement sub-video) for plural broadcasting programs and at least one advertisement, and is encoded by preset algorithm; and outputting the program guide having one or more of the advertisement sub-videos in accordance with predetermined condition.

In still another aspect, the present invention provides a system for providing a broadcasting service to at least one broadcasting terminal through a network, the system comprising: a video source generating section configured to generate a video source by processing a video signal for plural broadcasting programs and at least one advertisement; and a source encoding section configured to encode the generated video source by using preset algorithm, wherein the broadcasting terminal outputs a program guide having one or more of advertisement sub-videos included in the video source in accordance with predetermined condition.

In still another aspect, the present invention provides a recording media to be read by a digital processor and having a program of commands executed by the digital processor for the purpose of executing a broadcasting program provided from a broadcasting system through a network, the recording comprising: receiving a video source for a program guide from the broadcasting system through the network, wherein the video source includes sub-videos (broadcasting sub-video and advertisement sub-video) for plural broadcasting programs and at least one advertisement, and is encoded by preset algorithm; and outputting the program guide having at least one advertisement sub-video in accordance with predetermined condition.

A method and a system for providing an advertisement of the present invention may provide a program guide having various advertisement images in accordance with user's preference.

### BRIEF DESCRIPTION OF DRAWINGS

Example embodiments of the present invention will become more apparent by describing in detail example embodiments of the present invention with reference to the accompanying drawings, in which:

FIG. 1 is a block diagram illustrating a broadcasting system according to one example embodiment of the present invention;

FIG. 2 is a block diagram illustrating a digital data broadcasting system according to one example embodiment of the present invention;

FIG. 3 is a block diagram illustrating a broadcasting terminal according to one example embodiment of the present invention;

FIG. 4 is a view illustrating a video source for a program guide according to one example embodiment of the present invention;

FIG. 5 is a view illustrating a program guide according to one example embodiment of the present invention; and

FIG. 6 is a flowchart illustrating a process of providing an advertisement through the program guide according to one example embodiment of the present invention.

### DETAILED DESCRIPTION

Example embodiments of the present invention are disclosed herein. However, specific structural and functional details disclosed herein are merely representative for purposes of describing example embodiments of the present invention, however, example embodiments of the present invention may be embodied in many alternate forms and should not be construed as limited to example embodiments of the present invention set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between", "adjacent" versus "directly adjacent", etc.).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or configurations, but do not preclude the presence or addition of one or more other features, integers, steps, operations, elements, configurations, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

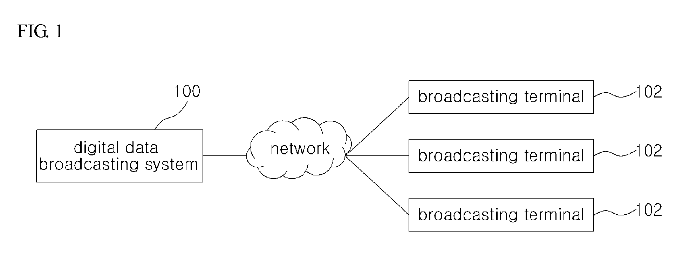

FIG. 1 is a block diagram illustrating a broadcasting system according to one example embodiment of the present invention.

In FIG. 1, the broadcasting system 100 is coupled to at least one broadcasting terminal 102 through a network. Here, the network includes, for example, a wire network having an Internet and an exclusive line, and a wireless network having a wireless Internet, a mobile communication network, a broadcasting network and a satellite communication network. Hereinafter, the network is assumed as the broadcasting network in that a broadcasting signal is provided through the network.

The broadcasting system 100 converts a video signal and an audio signal for broadcasting program of various channels into a proper format, and then transmits the converted signal to the broadcasting terminal 102.

In addition, the broadcasting system 100 performs a scheduling function about the broadcasting program and a scrambling function for blocking access of other people except a subscriber.

Furthermore, the broadcasting system 100 may include extra communication server, e.g. return path server for the purpose of processing requirement of a user through an uplink channel, and then provide Internet service and various communication service using the communication server.

The broadcasting system 100 provides a high definition broadcasting program compressed to digital. Hereinafter, the broadcasting system 100 is assumed as a digital data broadcasting system in that data service is provided through an application.

The digital data broadcasting system 100 may further provide data broadcasting application for use in various additional services and interactive service as well as the video signal/audio signal for a specific channel. Here, the data broadcasting application is formed by combining application for execution of a program with data corresponding to contents, e.g. is formed by combining the data received from news system, shopping system, stock system with the application.

The broadcasting terminal 102 performs tuning about a broadcasting signal transmitted from the digital data broadcasting system 100, and displays an image corresponding to the tuned broadcasting signal. Here, the broadcasting terminal 102 may be a set-top box coupled to a TV and for performing decoding of the broadcasting signal and the application, but is not limited as the set-top box. The broadcasting terminal 102 is not limited as specific terminal as long as the broadcasting terminal 102 provides a program guide having advertisement as described below.

The broadcasting terminal 102 processes the broadcasting program (video signal, audio signal and data signal) corresponding to a channel selected by the user of the tuned broadcasting signal, and then provides the processed broadcasting program to the user.

An operating system is set in the broadcasting terminal 102 so as to execute the application. Here, the operating system executes the application in case that the broadcasting signal has the data broadcasting application, thereby providing the data combined with the application to the user.

The application outputs an interface for request of a certain service by the user through a given display section, parses the data combined therewith in accordance with the request of the user, and outputs contents having the data such as text and graphic.

As described above, in case that the broadcasting terminal 102 provides the video signal converted into digital format and receives the data broadcasting application for additional service, much broadcasting standby time is required for selecting specific channel. Accordingly, the broadcasting terminal 102 provides a program guide so that the user may select easily a channel, thereby enabling the user to verify easily information concerning plural channels.

In one example embodiment of the present invention, the broadcasting terminal 102 generates dynamically the program guide having the advertisement on the basis of user's preference, etc. Particularly, the digital data broadcasting system 100 transmits a video source for the program guide to the broadcasting terminal 102. Here, the video source includes sub-videos (broadcasting sub-video and advertisement sub-video) generated by processing a video signal for broadcasting programs and at least one advertisement. The sub-video means a video signal generated by converting the video signal for the broadcasting programs transmitted from each of broadcasting stations to one with a smaller size, and is shown on a given area of the program guide outputted from the broadcasting terminal 102.

In addition, the broadcasting sub-video may be real moving picture broadcasted in a corresponding channel. However, the sub-video is not limited as the moving picture, i.e. may be a still image of the corresponding channel. Moreover, the advertisement sub-video may also include a moving picture and/or a still image.

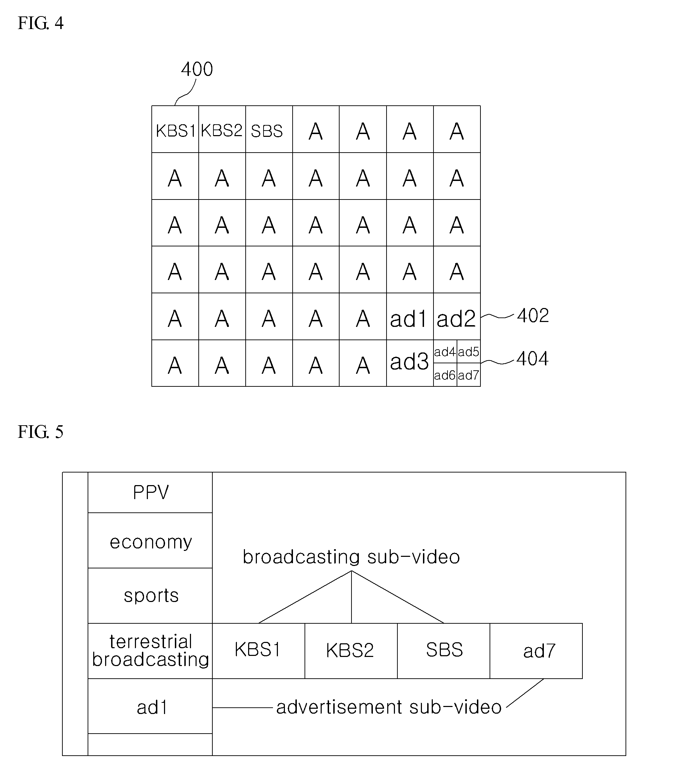

On the other hand, the video source may include the sub-videos for all or a part of the broadcasting programs that can be provided to the broadcasting terminal 102, as shown in FIG. 4.

In one example embodiment of the present invention, the digital data broadcasting system 100 uses an encoding method in accordance with H.264 standard having high compression efficiency so as to encode the video source for the program guide. As a result, the video source having many sub-videos may be generated. Here, the sub-videos may be a moving picture and a still image. The H.264 is a recently developed moving picture compression standard to transmit a moving picture with a bandwidth smaller than HD TV, and is referred to as MPEG-4 part 10: advanced video coding (AVC). The H.264 ensures video compressibility enhanced by about 50% compared to conventional MPEG4 in view of bit rates.

In conventional technique, a broadcasting system transmits a mosaic EPG having a limited number of sub-videos through a tool such as a mosaic screen generator. In addition, the broadcasting system should generate different mosaic EPGs in case that sub-videos in the mosaic EPGs are differently arranged. Additionally, in case that a mosaic EPG having the advertisement sub-video is provided, only the same advertisement sub-video is provided to every user.

However, the digital data broadcasting system 100 of the present embodiment provides the video source having the sub-videos for all available broadcasting programs and advertisements by using an improved compression technique. Hence, various advertisements may be provided to the users in limited bandwidth.

The video source having various advertisement sub-videos is transmitted to the broadcasting terminal 102. The broadcasting terminal 102 performs an editing process, etc. in accordance with preset condition, and outputs the program guide having the advertisement sub-video. Here, the preset condition means exposure condition of the advertisement in accordance with a user's preference, for example may be user's subscription information, subscription package information, information concerning user's preference in accordance with selection of the channel.

The broadcasting terminal 102 may determine whether or not the advertisement sub-video is to be included in the program guide, and number, size and location of the advertisement sub-video to be included in the program guide in accordance with the above information. In addition, the broadcasting terminal 102 performs a process of extracting the advertisement sub-video in accordance with the determination result.

In another example embodiment of the present invention, broadcasting programs may include videos on demand(VODs) provided by user's request. In case that a program guide is provided for the VODs, the video source for the program guide may include sub-videos for a part of each VOD to be provided.

FIG. 5 is a view illustrating a program guide according to one example embodiment of the present invention.

The program guide of the present embodiment may output a certain advertisement on a given area in accordance with the preset condition.

In one example embodiment of the present invention, the digital data broadcasting system 100 transmits the broadcasting sub-video for plural broadcasting programs to be provided and the advertisement sub-video for at least one advertisement to the broadcasting terminal 102. The broadcasting terminal 102 generates the program guide having one or more of advertisements in accordance with preset condition.

Accordingly, bandwidth for provision of the program guide service may be efficiently used compared to the conventional technique in which EPGs for plural broadcasting programs are respectively provided. In addition, since the broadcasting terminal 102 generates the program guide having various advertisements in accordance with the user's information, the advertisement corresponding to user's preference may be provided to corresponding user.

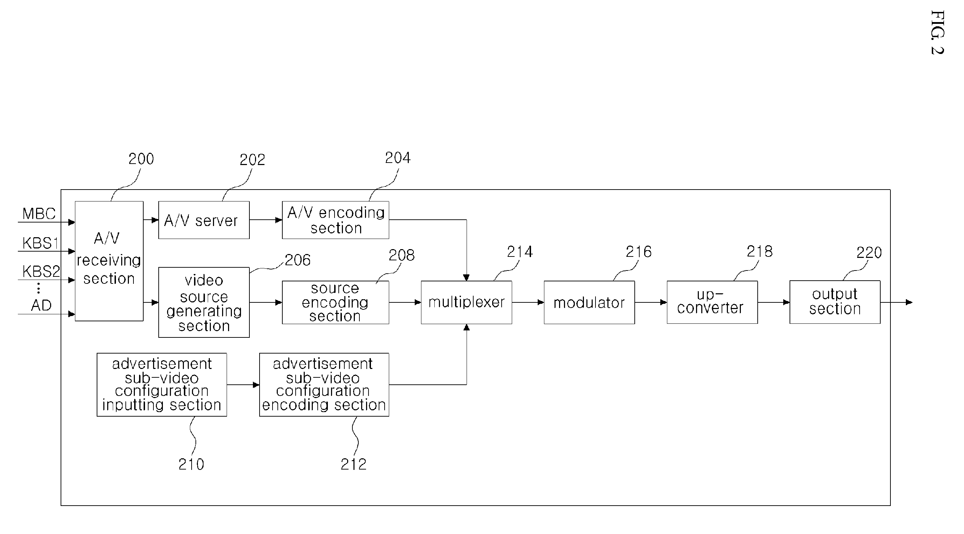

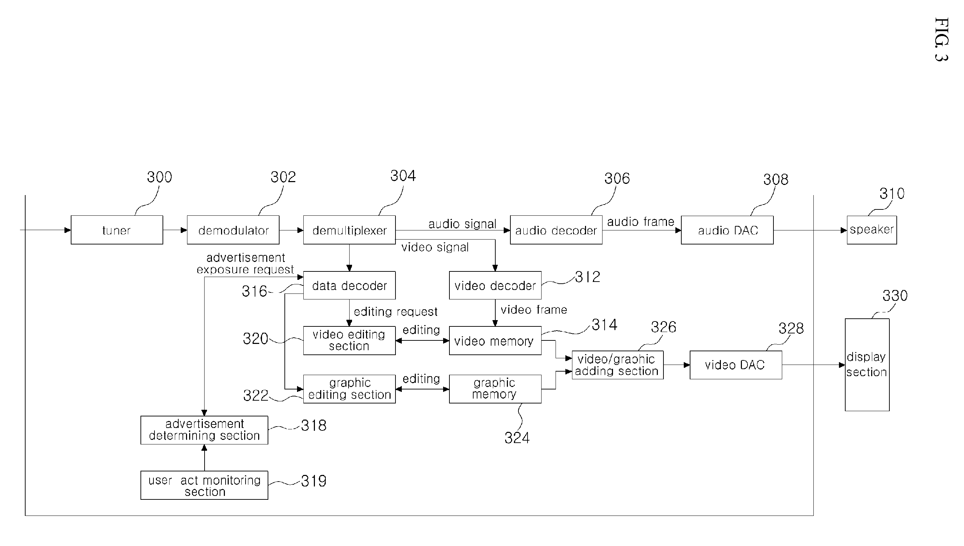

Hereinafter, a process of providing a program guide service will be described in detail with reference to accompanying FIG. 2 and FIG. 3.

FIG. 2 is a block diagram illustrating a digital data broadcasting system according to one example embodiment of the present invention.

In FIG. 2, an audio/video A/V receiving section 200 receives a broadcasting signal having an audio signal and a video signal provided from an external broadcasting provider or a terrestrial broadcasting station.

Additionally, the A/V receiving section 200 receives an advertisement broadcasting signal AD having an audio signal and a video signal for advertisement from an external advertisement sub-video provider.

An A/V server 202 collects and manages the received broadcasting signal, and outputs the broadcasting signal to an A/V encoding section 204.

An A/V encoding section 204 converts the received audio signal and the video signal into a predetermined data format. In one example embodiment of the present invention, the A/V encoding section 204 may convert the audio signal and the video signal into a moving picture experts group2-transport stream MPEG2-TS format corresponding to standard of the data broadcasting.

The video signal of the broadcasting signal, which is received by the A/V receiving section 200, is also provided to a video source generating section 206 for the program guide.

The video source generating section 206 generates a plurality of sub-videos for the broadcasting program and the advertisement to be provided by processing the provided video signal. Here, the sub-video is a signal generated by converting the size of the video signal to a small size so that the sub-video is shown on the program guide.

As mentioned above, the sub-video is a signal generated by converting the video signal to have small size so that the sub-video is shown on the program guide of the broadcasting terminal 102.

In one example embodiment of the present invention, the video source generating section 206 may generate the video source for the program guide having a broadcasting sub-video 400 and an advertisement sub-video 402 and 404. Here, ad1 to ad3 402 may be processed to have different size from ad4 to ad7 404. This processing is for transmitting more advertisements in predetermined transmission capacity. The size of the advertisement sub-video may be determined in accordance with subscription condition by an advertiser or exposure number of the advertisement sub-video, etc.

For example, the advertisement sub-video registered to high price or having high exposure number may be exposed with large size. Here, a resolution differs in accordance with the size of the advertisement sub-video.

The video source having the broadcasting sub-video for broadcasting programs of every channel provided at present and the advertisement sub-video is transmitted to the video source encoding section 208.

The video source encoding section 208 encodes the transmitted video source in accordance with preset algorithm. Preferably, the video source encoding section 208 encodes the sub-videos by using the algorithm in accordance with H.264 compression standard.

The video source encoding section 208 may be embodied as a high definition HD chip set. As a result, the video source encoding section 208 encodes the video source to have high compression efficiency with maintaining high definition.

On the other hand, the digital data broadcasting system 100 should transmit information concerning configuration of the advertisement sub-video (Hereinafter, referred to as "advertisement sub-video configuration information") to the broadcasting terminal 102 so that the broadcasting terminal 102 outputs the program guide having the advertisement sub-video included in the video source.

An advertisement sub-video configuration inputting section 210 receives the advertisement sub-video configuration information inputted by a manager. Here, the advertisement sub-video configuration information includes information concerning identifier ID and size of the advertisement sub-video included in the video source as shown in FIG. 4. The advertisement sub-video configuration information may be properly selected in accordance with characteristic of a network using caption of a digital broadcasting, a data broadcasting technique, or a teletext technique of an analog broadcasting, etc.

In one example embodiment of the present invention, the advertisement sub-video configuration information may include further location information corresponding to X coordinate and Y coordinate. Here, the location information is used for arranging respective advertisement sub-videos included in the program guide in case that the sub-videos for broadcasting programs of every channel provided at present and the advertisement are outputted at a time as shown in FIG. 4. However, in case that the broadcasting terminal 102 determines dynamically whether or not the program guide includes the advertisement sub-video, location and size of the advertisement sub-video, the above location information may not be included in the advertisement sub-video configuration information.

The advertisement sub-video configuration information is encoded by an advertisement sub-video configuration encoding section 212, and then the encoded information is outputted to a multiplexer 214.

The multiplexer 214 makes the signals provided from the A/V encoding section 204, the video source encoding section 208 and the advertisement sub-video configuration encoding section 212 into one broadcasting signal to be broadcasted.

A modulator 216 modulates the broadcasting signal in accordance with standard of a broadcasting medium, e.g. terrestrial broadcasting, cable broadcasting, satellite broadcasting.

An up-converter 218 up-converts the modulated broadcasting signal to have a frequency to be transmitted.

An output section 220 outputs the up-converted broadcasting signal through broadcasting medium.

FIG. 3 is a block diagram illustrating a broadcasting terminal according to one example embodiment of the present invention.

The broadcasting terminal 102 of the present embodiment may be a set-top box coupled to a TV so as to provide a digital data broadcasting service.

In FIG. 3, a tuner 300 outputs selectively a broadcasting signal for a corresponding channel of the received broadcasting signals with synchronization with a given frequency.

A demodulator 302 demodulates the broadcasting signal outputted from the tuner 300. Here, the demodulated broadcasting signal includes an audio signal, a video signal and data signal, and the demodulator 304 extracts the audio signal, the video signal and the data signal from the demodulated broadcasting signal, and outputs the extracted signals. This may be performed through demuxing and section filtering.

The audio signal outputted from the demultiplexer 304 is decoded by an audio decoder 306. The decoded audio signal is converted into an analog signal through an audio digital analog converter (DAC) 308, and then the converted audio signal is outputted through a speaker 310.

The video signal outputted from the demultiplexer 304 is outputted as video frame not compressed by decoded by a video decoder 312. The video frame is temporarily stored in a video memory 314.

The video memory 314 stores temporarily a still image of the video frame.

On the other hand, to output the program guide having the advertisement sub-video, the demultiplexer 304 outputs the advertisement sub-video configuration information corresponding to data to a data decoder 316. In this case, the data decoder 316 may request editing of the advertisement sub-video to a video editing section 320 in accordance with an advertisement exposure request signal of an advertisement determining section 318. Here, the advertisement determining section 318 may determine whether or not corresponding advertisement is to be included in the program guide, number, size and location of the advertisement sub-video in the program guide in accordance with preset condition such as subscription information, subscription package information and preference information in accordance with selection of the channel stored in a user's act monitoring section 319.

The user's subscription information includes basic information such as user's age, sex and area. The subscription package information may include information as to whether or not the user, to which the program guide is to be provided, agrees to exposure of the advertisement.

In case that the advertisement determining section 318 request exposure of the advertisement, the data decoder 316 decodes the advertisement sub-video configuration information transmitted from the digital data broadcasting system 100, and requests an editing process to the video editing section 320.

The video editing section 320 performs the editing process such as a process of clipping desired area, a scaling process and a transiting process through the video frame stored temporarily in the video memory 314.

In one example embodiment of the present invention, the video signal outputted from the demultiplexer 304 includes sub-video signals for plural broadcasting programs and advertisements. The video editing section 320 performs the editing process about the broadcasting sub-video and the advertisement sub-video included in the video source in case that it is determined that the advertisement is exposed. Particularly, the video editing section 320 may perform a process of selecting only the advertisement sub-video corresponding to the user's preference of the advertisement sub-videos. In addition, the video editing section 320 may perform a process of converting size of the advertisement sub-video through interpretation of the advertisement sub-video configuration information. That is, the video editing section 320 magnifies or reduces the size of the advertisement sub-video considering original size of the advertisement sub-video.

The graphic editing section 322 extracts a graphic corresponding to the program guide from a graphic memory 324, and edits the extracted graphic. Here, the graphic may have preset wall paper, etc. outputted with the program guide for selection of the channel.

A video/graphic adding section 326 adds a still image (in a unit of a frame), stored in the video memory 314, i.e. still image of the sub-video frame selected in accordance with the user's preference, to the graphic provided from the graphic memory 324.

A video/graphic generated by the adding is transmitted to a video DAC 328.

The video DAC 328 converts the digital video/graphic into an analog signal, and then outputs the converted video/graphic to a display section 330.

The program guide outputted from the display section 330 may have the advertisement image on a given area shown in FIG. 5.

In the program guide shown in FIG. 5, the advertisement sub-video may include only ad1 and ad7 of seven advertisement sub-videos, i.e. ad1 to ad7 in FIG. 4 in accordance with the preset condition. Here, size of the advertisement sub-video transmitted from the digital data broadcasting system 100 may be changed. The advertisement sub-video may be arranged in parallel to the broadcasting sub-video corresponding to a certain genre or be arranged in a genre area. Namely, arrangement of the advertisement sub-video may be variously modified.

The user may verify the broadcasting sub-video for various broadcasting programs and a moving picture for the advertisement in accordance with his preference through the program guide as shown in FIG. 5.

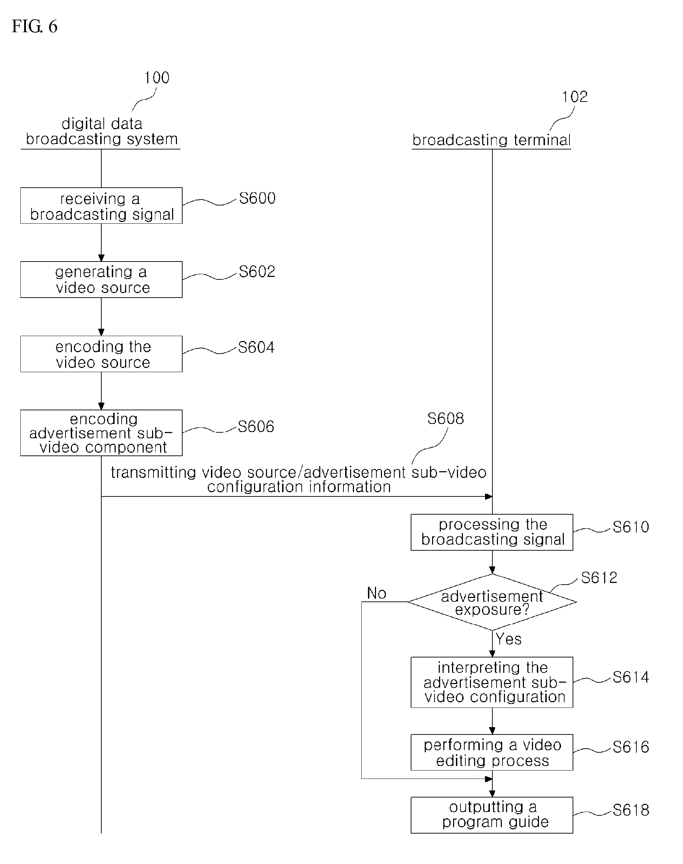

Hereinafter, a process of providing the advertisement through the program guide will be described in detail with reference to accompanying FIG. 6.

Referring to FIG. 6, in step of S600, the digital data broadcasting system 100 receives the broadcasting signal for the broadcasting program and the advertisement from an external broadcasting provider or a terrestrial broadcasting station.

In step of S602, the digital data broadcasting system 100 generates the video source for the program guide by processing the video signal for the broadcasting program and the advertisement.

In step of S604, the digital data broadcasting system 100 encodes the video source in accordance with predetermined algorithm.

In step of S606, the digital data broadcasting system 100 receives the advertisement sub-video configuration information, and then encodes the received configuration information. Here, the advertisement sub-video configuration information may include the information concerning identifier and size of the advertisement sub-video included in the video source as described above.

In above description, the step S606 is performed after the step S604. However, the step S606 is not limited as the above order.

In step of S608, the encoded video source and the advertisement sub-video configuration information are transmitted to the broadcasting terminal 102.

In step of S610, the video source and the advertisement sub-video configuration information are included in the broadcasting signal, and then the broadcasting signal is transmitted to the broadcasting terminal 102. The broadcasting terminal 102 extracts the video source and the advertisement sub-video configuration information from the transmitted broadcasting signal through the demodulating, demuxing, etc.

In step of S612, in case that output of the program guide is requested, the broadcasting terminal 102 determines whether or not corresponding advertisement is to be included in the program guide.

In step of S616, the broadcasting terminal 102 interprets the advertisement sub-video configuration information in case that it is determined that the advertisement is to be included in the program guide, and then performs a video editing process through the interpreted result.

In step of S618, the broadcasting terminal 102 outputs the program guide having only advertisement sub-video corresponding to the user's preference of the sub-videos included in the video source.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the configuration parts and/or arrangements of the subject combination arrangement within the scope of the disclosure, the drawings and the appended claims. In addition to variations and modifications in the configuration parts and/or arrangements, alternative uses will also be apparent to those skilled in the art.

## Claims

1. A method of providing an advertisement in a broadcasting system coupled to at least one broadcasting terminal through a network, the method comprising:
generating a video source for a program guide by processing a video signal for plural broadcasting programs and at least one advertisement;
encoding the generated video source by using predetermined algorithm; and
transmitting the encoded video source to the broadcasting terminal or terminals,
wherein the broadcasting terminal outputs the program guide having one or more of advertisement sub-videos included in the video source in accordance with preset condition.

2. The method of claim 1, wherein the video source includes the advertisement sub-videos in different size.

3. The method of claim 2, wherein size of the advertisement sub-video is determined in accordance with one or more of advertisement subscription condition by an advertiser, exposure number of the advertisement sub-video and selection number of the advertisement sub-video by a user.

4. The method of claim 1, wherein the video source includes sub-videos for broadcasting programs of every channel provided at present.

5. The method of claim 1, wherein the step of encoding is performed by H.264 compression standard, and the step of transmitting is performed by transmitting the encoded video source through one channel.

6. The method of claim 1, further comprising:
transmitting an advertisement sub-video configuration information, having at least one of information concerning identifier of respective advertisement sub-videos and information concerning size of the advertisement sub-videos, to the broadcasting terminal,
wherein the advertisement sub-videos are included in the video source.

7. The method of claim 1, wherein the broadcasting terminal determines whether or not the advertisement sub-video is to be included in the program guide, number of the advertisement sub-video included in the program guide, and size and location of respective advertisement sub-videos in accordance with one or more of user's subscription information, subscription package information and user's preference information depending on selection of a channel.

8. A method of providing an advertisement in a broadcasting terminal for executing a broadcasting program transmitted from a broadcasting system through a network, the method comprising:
receiving a video source for a program guide from the broadcasting system through the network, wherein the video source has sub-videos (broadcasting sub-video and advertisement sub-video) for plural broadcasting programs and at least one advertisement, and is encoded by preset algorithm; and
outputting the program guide having one or more of the advertisement sub-video in accordance with predetermined condition.

9. The method of claim 8, wherein the step of outputting the program guide includes:
determining whether or not the advertisement sub-video is to be included in the program guide in accordance with the predetermined condition;
determining number of the advertisement sub-videos included in the program guide, size and location of respective advertisement sub-videos in case that it is determined that the advertisement sub-video is to be included in the program guide; and
extracting the determined advertisement sub-video from the video source.

10. The method of claim 8, wherein the program guide is outputted by using one or more of user's subscription information, subscription package information and user's preference information in accordance with selection of a channel.

11. The method of claim 8, further comprising:
receiving an advertisement sub-video configuration information, having at least one of information concerning identifier of respective advertisement sub-videos and information concerning size of the advertisement sub-videos, from the broadcasting system through the network,
wherein the step of outputting the program guide includes editing the advertisement sub-video by using the advertisement sub-video configuration information.

12. The method of claim 11, wherein the advertisement sub-video configuration information further includes information concerning location of respective advertisement sub-videos.

13. The method of claim 11, wherein the step of outputting the program guide includes magnifying or reducing a part or all of the advertisement sub-videos in accordance with the predetermined condition.

14. A system for providing a broadcasting service to at least one broadcasting terminal through a network, the system comprising:
a video source generating section configured to generate a video source by processing a video signal for plural broadcasting programs and at least one advertisement; and
a source encoding section configured to encode the generated video source by using preset algorithm,
wherein the broadcasting terminal outputs a program guide having one or more of advertisement sub-videos included in the video source in accordance with predetermined condition.

15. The system of claim 14, wherein the video source generating section generates the video source for broadcasting programs of every channel provided at present, and the source encoding section encodes the video source to one file in accordance with H.264 compression standard.

16. The system of claim 14, wherein the video source generating section generates the video source, which includes the advertisement sub-videos having different size, in accordance with one or more of advertisement subscription condition by an advertiser, exposure number of the advertisement sub-video and selection number of the advertisement sub-video.

17. A recording media to be read by a digital processor and having a program of commands executed by the digital processor for the purpose of executing a broadcasting program provided from a broadcasting system through a network, the recording comprising:
receiving a video source for a program guide from the broadcasting system through the network, wherein the video source includes sub-videos (broadcasting sub-video and advertisement sub-video) for plural broadcasting programs and at least one advertisement, and is encoded by preset algorithm; and
outputting the program guide having at least one advertisement sub-video in accordance with predetermined condition.
